(19) Europäisches Patentamt
European Patent Office
Office européen des brevets

(11) **EP 2 181 935 B1**

(12) **EUROPÄISCHE PATENTSCHRIFT**

(45) Veröffentlichungstag und Bekanntmachung des Hinweises auf die Patenterteilung:
**22.06.2016 Patentblatt 2016/25**

(21) Anmeldenummer: **10000094.2**

(22) Anmeldetag: **01.04.2005**

(51) Int Cl.:
*B65D 77/06* (2006.01)    *B65D 90/46* (2006.01)
*B29C 49/04* (2006.01)    *B29C 49/22* (2006.01)
*B29C 49/00* (2006.01)

(54) **Verfahren zur Herstellung von gegen elektrostatische Aufladungen geschützten Behältern**

Method of manufacturing an anti-static container

Procédé de fabrication d'un récipient antistatique

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **06.04.2004 DE 102004017326**

(43) Veröffentlichungstag der Anmeldung:
**05.05.2010 Patentblatt 2010/18**

(62) Dokumentnummer(n) der früheren Anmeldung(en) nach Art. 76 EPÜ:
**05007142.2 / 1 586 511**

(73) Patentinhaber: **Schneider, Ekkehard, Dipl.-Ing.**
**57610 Altenkirchen (DE)**

(72) Erfinder: **Schneider, Ekkehard, Dipl.-Ing.**
**57610 Altenkirchen (DE)**

(74) Vertreter: **Geskes, Christoph et al**
**Geskes Patent- und Rechtsanwälte**
**Gustav-Heinemann-Ufer 74b**
**50968 Köln (DE)**

(56) Entgegenhaltungen:
**EP-A1- 1 439 131      DE-A1- 10 013 000**
**DE-A1- 10 216 960      DE-U1- 20 300 592**
**US-B1- 6 283 320**

## Beschreibung

Die vorliegende Erfindung betrifft ein Verfahren zur Herstellung von gegen elektrostatische Aufladungen geschützten Behältern für den Transport und/oder die Lagerung von fließfähigen Stoffen.

Behälter für den Transport und/oder die Lagerung von fließfähigen Stoffen, insbesondere Flüssigkeiten, finden in vielfältigen Ausgestaltungen Verwendung, beispielsweise als Fässer, IBC oder Schlingertanks. Diese Behälter werden üblicherweise aus Kunststoffmaterialien hergestellt. Bei derartigen Kunststoffbehältern besteht die Gefahr, daß infolge Reibung mit dem Füllgut die Behälteroberfläche eine elektrostatische Aufladung erfährt. Bei der Verwendung derartiger Behälter für Flüssigkeiten, deren Dämpfe leicht entzündlich sind, oder bei der Verwendung derartiger Behälter in Bereichen, die aus anderen Gründen als explosionsgefährdet einzustufen sind, besteht die Gefahr, daß durch eine Entladung der elektrostatischen Aufladung der Behälteroberfläche unter Funkenbildung eine Explosion ausgelöst werden kann.

Zur Vermeidung dieser Gefahr ist aus DE 202 06 436 U ein Behälter bekannt, der mit einer dauerantistatischen Außenschicht aus einem Kunststoff mit einem Leitrußanteil versehen ist. Damit sind elektrische Entladungen unter Funkenbildung zwischen dem Behälter und dem Untergestell und/oder dem Schutzgitter ausgeschlossen. Ein Nachteil dieses vorbekannten Behälters besteht darin, daß durch den Leitrußanteil in der Außenschicht gegebenenfalls auch in der Wandung des Behälters selbst infolge der Zumischung von leitrußhaltigen Kunststoffabfällen die Behälterwandungen undurchsichtig sind, so daß eine optische Füllstandskontrolle nicht möglich ist. Um eine derartige optische Füllstandskontrolle doch zu ermöglichen, ist ein aufwendiges Herstellungsverfahren vorgesehen, durch welches vorzugsweise in den Eckbereichen beim Extrusionsvorgang in dem aus im wesentlichen undurchsichtigen Kunststoffmaterial bestehenden schlauchförmigen Rohling ein Streifen aus durchscheinendem oder durchsichtigem Kunststoffmaterial eingebracht wird. Hierdurch besteht jedoch die Gefahr, daß bei der stofflichen Verbindung zwischen dem Sichtstreifenmaterial und dem angrenzenden undurchlässigen Kunststoffmaterial infolge von Inhomogenitäten nicht die gleiche Festigkeit erreicht wird wie in den übrigen Wandungsbereichen des Behälters.

DE 102 16 960 offenbart einen Kunststoffbehälter, wobei die Wandungen des Behälters durch Koextrusion dreischichtig aufgebaut sind, und wobei die Basis schicht auf der Behälter innenseite mit einer Innenschicht aus einem intrinsisch-elektrisch Leitenden Kunststoffmaterial versehen ist.

Aus EP 1439131, das unter Artikel 54(3) EPÜ fällt ist ein Behälter bekannt, wobei die Wandung durch die Herstellung im Blasverfahren aus wenigstens einer Schicht aus einem Kunststoffmaterial mit elektrisch-eigenleitenden intrinsischen Eigenschaften bestehen.

Transport- und/oder Lagerbehälter aus Kunststoffen, beispielsweise Fässer, Tonnen, quaderförmige Behälter oder dergleichen werden für unterschiedliche Füllvolumen produziert und sind vielfach aus farbigen Kunststoffen hergestellt. Solche farbigen Behälter können aber nicht mit einer Leitruß enthaltenden äußeren Kunststoffschicht versehen werden, ohne die farbliche Optik zumindest zu beeinträchtigen. In der Regel ist die Leitruß enthaltende äußere Kunststoffschicht nahezu lichtundurchlässig und damit die Außenfläche schwarzfarbig.

Der vorliegenden Erfindung liegt daher die Aufgabe zugrunde, einen gegen elektrostatische Aufladungen geschützten Behälter zur Verfügung zu stellen, der die vorstehend genannten Nachteile vermeidet und den an diesen gestellten Anforderungen hinsichtlich der Stabilität und Festigkeit nach den maßgeblichen Normen entspricht.

Diese Aufgabe wird erfindungsgemäß gelöst durch ein Verfahren zur Herstellung eines gegen elektrostatische Aufladungen geschützten Behälters für Transport und/oder Lagerung von fließfähigen Stoffen, dessen Wandungen mindestens einschichtig aufgebaut sind unter Verwendung eines leitfähigen Kunststoffes, wobei die mindestens eine Schicht ein erstes Kunststoffmaterial umfasst, der einen mittleren spezifischen Widerstand von kleiner als $10^{10}\,\Omega$ aufweist, wobei ein Anteil des ersten Kunststoffmaterials mit einem Anteil eines leitfähigen Kunststoffes und einem Anteil eines Basiskunststoffes in Form eines Masterbatches mit einem Anteil eines nichtleitfähigen Kunststoffmaterials in einem vorgebbaren Verhältnis gemischt und die Mischung einer Blasformmaschine zugeführt wird, bevorzugt kleiner als $10^9\,\Omega$, weiter bevorzugt kleiner als $10^8\,\Omega$, aufweist.

Unter dem mittleren spezifischen Widerstand im Sinne der vorliegenden Erfindung wird der spezifische Oberflächenwiderstand verstanden, berechnet gemäß DIN 53482 aus dem Oberflächenwiderstand $R_0$, bestimmt an aus dem betreffenden Kunststoffmaterial gepreßten Platten gemäß der folgenden Formel

$$\rho_s = \frac{d_m * \pi}{g} * R_0$$

wobei $d_m$ den mittleren Schutzspaltdurchmesser in der zur Bestimmung des gemessenen Oberflächenwiderstandes $R_o$ verwendeten Elektrodenanordnung angibt und hier 32 mm beträgt, g die Breite des Schutzspalts der zur Bestimmung verwendeten Elektrodenanordnung angibt und hier 6 mm beträgt, und $\rho_s$ den spezifischen Oberflächenwiderstand in $\Omega$ angibt. Zur Bestimmung des mittleren spezifischen Oberflächenwiderstandes wurden dabei die rechnerischen Mittelwerte aus wenigstens drei durchgeführten Messungen genommen.

Bevorzugt ist der mittlere spezifische Widerstand des ersten Kunststoffmaterials geringer als 500 x $10^7\,\Omega$, weiter bevorzugt geringer als 200 x $10^7\,\Omega$. Über-

raschenderweise hat sich gezeigt, daß bei Einsatz eines derartigen ersten Kunststoffmaterials für die Herstellung der erfindungsgemäßen Behälter bereits keine antistatischen Aufladungen mehr auftreten und hierdurch auch Gefahren-stoffe, insbesondere leicht entflammbare oder entzündliche Gefahrenstoffe, sicher transportiert und gelagert werden können. Der Vorteil besteht insbesondere darin, daß das erste Kunststoffmaterial lichtdurchscheinend eingesetzt werden kann und eine Zumischung von bekannten leitfähigen Materialien wie Leitruß vermieden wird. Daher ist eine optische Füllstandskontrolle ermöglicht, da die Wandungen eines aus diesem ersten Kunststoffmaterial hergestellten Behälters allseitig lichtdurchscheinend ausgeführt sein können.

Ein weiterer Vorteil besteht darin, daß die Wandungen eines derartigen Behälters keinerlei Unterbrechungen ihrer stofflichen Zusammensetzung aufweisen und dementsprechend eine zuverlässige Eigenfestigkeit gegeben ist, welche insbesondere den an derartige Behälter gestellten Anforderungen und Normen auch entsprechen. Darüber hinaus ist es im Hinblick auf die für die Herstellung der erfindungsgemäßen Behälter notwendigen Gerätschaften, insbesondere Extruder und Blasformvorrichtungen, vorteilhaft, daß nach Abschluß einer Fertigung der Behälter diese ohne eine aufwendige Reinigung zur Herstellung sonstiger Behälter eingesetzt werden können.

Das erste Kunststoffmaterial umfaßt als Basiskunststoff, welcher nicht leitfähig ist, ein Homo-, Co-, Random- und/oder Blockcopolymer auf, ausgewählt aus einer Gruppe umfassend Polyethylen und/oder Polypropylen. Vorzugsweise ist der Basiskunststoff ein High-density-Polyethylen, weiter bevorzugt wird ein lineares High-density-Polyethylen mit 1 bis 5 Seitenketten auf 1000 Ketten Kohlenstoffatome eingesetzt. Unter High-density-Polyethylen wird insbesondere ein Polyethylen verstanden, welches eine Dichte in einem Bereich von etwa 0,94 bis etwa 0,965 g/cm$^3$, einen Schmelzpunkt in einem Bereich von etwa 120 bis 135 °C und eine Kristallinität in einem Bereich von etwa 70 bis etwa 85% aufweist.

Der leitfähig Kunststoff weist bevorzugt, gegebenenfalls nach einer Dotierung, eine Leitfähigkeit von mindestens etwa 1 S m$^{-1}$ auf. Der leitfähige Kunststoff kann dabei mit einem Elektronendonator oder einem Elektronenakzeptor dotiert sein. Der Elektronendonator oder Elektronenakzeptor ist vorzugsweise ausgewählt aus einer Gruppe umfassend Halogenide wie Fluoride, Bromide, Chloride oder Jodide und/oder schwefelhaltige Verbindungen, insbesondere Sulfonsäuren.

Vorzugsweise ist der leitfähige Kunststoff ausgewählt aus einer Gruppe umfassend Polyacetylene, Polypyrole, Polythiophene, Polyaniline, Polyethylendioxithiophene (PEDOT), Polyphenylenvinylidene und/oder Polydialkylfluorene. Der Vorteil der Zugabe der vorgenannten leitfähigen Kunststoffe zu dem Basiskunststoff zur Bildung des ersten Kunststoffmaterials liegt insbesondere darin, daß hierdurch ein sehr homogenes Gemisch des ersten Kunststoffmaterials erhältlich ist, welches die Herstellung der erfindungsgemäßen Behälter in einer sehr homogenen Form, insbesondere mittels des Verfahrens des Blasformens, ermöglicht. Vorteilhaft insbesondere bei dem Einsatz von Polypyrolen und Polythiophenen bzw. deren Derivaten einschließlich PEDOT ist, daß diese nicht notwen-digerweise eine Dotierung durch einen zusätzlich zugegebenen Elektronendonator oder Elektronenakzeptor benötigen, da diese bereits in einer dotierten Form originär herstellbar sind.

In der Ausführungsform des Behälters weist die mindestens eine die Wandung bildende Schicht ein nichtleitfähiges Kunststoffmaterial auf, das einen mittleren spezifischen Widerstand von größer als 200 x 10$^{15}$ $\Omega$ aufweist. Denn überraschenderweise hat sich herausgestellt, daß zur Sicherung gegen elektrostatische Aufladungen bereits die Zugabe einer auch geringen Menge des ersten Kunststoffmaterials zu einem nichtleichtfähigen Kunststoffmaterial sicherstellt, daß solche Aufladungen vermieden werden. Besonders vorteilhaft hieran ist insbesondere, daß die Verarbeitung des für die mindestens eine Schicht verwendeten sowie des nichtleitfähigen Kunststoffmaterials die Herstellung von Behältern ermöglicht, welche eine sehr homogene Wandungsstruktur aufweisen.

Das fähige Kunststoffmaterial weist einen zweiten Kunststoff auf, welcher ausgewählt ist aus einer Gruppe umfassend Homo-, Co-, Random- und/oder Blockcopolymere des Polyethylen und/oder Polypropylen.

Der Basiskunststoff des ersten Kunststoffmaterials ist chemisch identisch zu dem zweiten Kunststoff des nichtleitfähigen Kunststoffmaterials. Chemisch identisch heißt dabei, daß die eingesetzten Kunststoffe die gleiche chemische Struktur aufweisen. Besonders bevorzugt ist dabei der Basiskunststoff und der zweite Kunststoff ein High-density-Polyethylen.

Bevorzugt weist die Schicht das erste Kunststoffmaterial in einer Menge von 0,5 bis 50 Gew%, bezogen auf die gesamte Schicht, auf. Weiter bevorzugt weist die Schicht das erste Kunststoffmaterial in einer Menge in einem Bereich von etwa 3 bis etwa 30 Gew%, noch weiter bevorzugt in einem Bereich von etwa 15 bis etwa 25 Gew%, auf. Das erste Kunststoffmaterial selbst weist dabei den Basiskunststoff in einer Menge von mindestens 90 Gew%, weiter bevorzugt von mindestens 95 Gew%, noch weiter bevorzugt von mindestens 98 Gew%, bezogen auf die Gesamtmenge des ersten Kunststoffmaterials, auf. Der leitfähige Kunststoff ist in dem ersten Kunststoffmaterial vorzugsweise in einer Menge von etwa 0,05 bis 5 Gew%, weiter bevorzugt von etwa 0,2 bis etwa 2 Gew%, wiederum bezogen auf die Gesamtmenge des ersten Kunststoffmaterials, enthalten. Das erste Kunststoffmaterial liegt dabei als Masterbatch vor.

Bevorzugt ist der mittlere spezifische Widerstand der Schicht selbst kleiner als 190 x 10$^{15}$ $\Omega$, weiter bevorzugt kleiner als 150 x 10$^{15}$ $\Omega$, noch weiter bevorzugt

kleiner als 100 x 10$^{15}$ Ω. In einer besonders bevorzugten Ausführungsform sind die Wandungen des Behälters mindestens dreischichtig aufgebaut, wobei die innenliegende mindestens eine Schicht das erste Kunststoffmaterial aufweist, wohingegen die Außen- und Innenschicht das erste Kunststoffmaterial, umfassend den leitfähigen Kunststoff, nicht aufweisen. Besonders bevorzugt ist eine Ausführungsform, in welcher der Behälter aus drei Schichten aufgebaut ist. Die innenliegende Schicht weist dabei bevorzugt eine Mischung des ersten Kunststoffmaterials mit dem weiteren, nichtleitfähigen Kunststoffmaterial auf, wobei vorzugsweise das erste Kunststoffmaterial in einer Menge in einem Bereich von etwa 10 bis etwa 25 Gew%, bezogen auf die Gesamtmenge dieser Innenschicht, vorliegt. Die Außen- und die Innenschicht sind vorzugsweise ausschließlich aus dem weiteren Kunststoffmaterial gebildet. Bei dieser Ausführungsform ist besonders vorteilhaft, daß die solchermaßen aufgebauten Behälter hohe mechanische Eigenfestigkeiten durch die spezifische Ausbildung der Außen- und Innenschicht aufweisen. Schließlich kann eine gute Haftung der einzelnen Schichten untereinander erzielt werden insbesondere dann, wenn der Basiskunststoff und der zweite, nichtleichtfähige Kunststoff aus Highdensity-Polyethylen gebildet sind. Dabei kann zusätzlich bei der Herstellung der Behälter ein Haftvermittler vorgesehen werden. Grundsätzlich ergibt sich durch eine Mischung eines Basiskunststoffes zu dem leitfähigen Kunststoff im ersten Kunststoffmaterial der weitere Vorteil einer erheblichen Kostenreduzierung, da nur so viel leitfähiger Kunststoff beigemischt werden muß, dass die geforderte Ladungsdichte auf der Behälteroberfläche von max. 40 Nano-Coulomb pro cm$^2$ eingehalten werden kann. Bevorzugt beträgt die Ladungsdichte auf der Behälteroberfläche bis maximal 40 nCb/cm$^2$, noch weiter bevorzugt bis maximal bis 10 nCb/cm$^2$.

Des weiteren ist auch die Möglichkeit gegeben, aus farbigem Kunststoffmaterial herzustellende Transport- und/oder Lagerbehälter in EX-geschützter Ausführung herzustellen. Der leitfähige Kunststoff kann in farbigen Basiskunststoff unmittelbar eingemischt werden. Alternativ ist es insbesondere bei einer dreischichtigen Ausführung der Behälterwandungen auch möglich, daß nur die Innen- und die Außenwandung aus einem farbigen weiteren, nichtleitfähigen Kunststoffmaterial hergestellt werden. Es ist aber selbstverständlich auch möglich, nur eine durchsichtige äußere Schicht aus einer Mischung des ersten Kunststoffmaterials mit dem weiteren Kunststoffmaterial auf einer weiteren farbigen Schicht eines nichtleitfähigen Kunststoffmaterials aufzubringen, so daß die Farbe durchscheint.

Wird ein lediglich zweischichtiger Aufbau der Behälterwandungen gewünscht, so besteht hierbei vorzugsweise die Außenschicht aus einer Mischung des ersten Kunststoffmaterials mit dem weiteren Kunststoffmaterial. Hierdurch ist ebenso wie bei dem vorstehend beschriebenen dreischichtigen Aufbau vorteilhafterweise sichergestellt, daß das in dem Behälter transportierte oder gelagerte Gut mit hochreinem HDPE des nichtleitfähigen Materials ausschließlich in Kontakt steht und insbesondere die Gefahr vermindert wird, daß die die Leitfähigkeit erzeugenden Bestandteile des ersten Kunststoffmaterials durch das transportierte Gut, insbesondere Lösemittel, ausgelöst und hierdurch das transportierte Gut verunreinigt wird.

Bei einem zweischichtigen Aufbau kann die Außenschicht, umfassend das erste Kunststoffmaterial, gerade auch im Hinblick auf die an die Behälter gestellten Festigkeitsanforderungen sehr dünn ausgeführt werden, beispielsweise in einer Stärke von max. 1 mm, wobei diese Stärke auch in dem Eckenbereich der Behälter darunter liegen kann. Auch bei einer Ausführung mit einem dreischichtigen Aufbau kann die das erste Kunststoffmaterial aufweisende Zwischenschicht sehr dünn und damit kostensparend ausgeführt werden.

Durch die Vorlage der das erste Kunststoffmaterial bildenden Mischung aus einem leitfähigen Kunststoff und einem Basiskunststoff in Form eines Masterbatches wird vorteilhafterweise erzielt, daß der leitfähige Kunststoff bereits gleichmäßig verteilt in dem Basiskunststoff vorliegt. Dann kann auch bei der weiteren Vermischung dieses ersten Kunststoffmaterials mit dem weiteren Kunststoffmaterial und bei Vorsehung hier chemisch identischer Basiskunststoffe und nichtleitfähiger Kunststoffe eine weitgehend homogene Verteilung des leitfähigen Kunststoffes in dieser Mischung erzielt werden, die eine gute weitere Verarbeitbarkeit insbesondere im Hinblick auf die Homogenität der herzustellenden Behälterwandungen ermöglicht. Die Mischung des ersten Kunststoffmaterials mit dem nichtleitfähigen Kunststoffmaterial kann dabei in einem Extruder erfolgen oder aber auch in einer der eigentlichen Blasformmaschine vorgeschalteten Rührvorrichtung oder sogar von Hand. Überraschenderweise hat sich gezeigt, daß eine Vermischung in einer Rührvorrichtung oder sogar von Hand vorteilhaft gegenüber einer Mischung in einem Extruder ist.

Vorteilhafterweise wird das erste Kunststoffmaterial zur Bildung einer mittleren Schicht einer mehrschichtigen Wandung des im Blasformverfahren herzustellenden Behälters mit dem zur Bildung der tragenden Außen- und Innenschicht des nichtleitfähigen Kunststoffmaterials als schlauchförmiger Rohling koextrudiert, welcher dann der Blasformmaschine zugeführt wird. Durch diese Maßnahme ist eine einwandfreie Verbindung zwischen der das erste Kunststoffmaterial enthaltenden Schicht und der Außen- und Innenschicht gewährleistet. Vorzugsweise wird dabei die Extrusion mit einer speziell ausgestalteten Ringdüse vorgenommen. Es ist gleichwohl auch möglich, mittels des erfindungsgemäßen Verfahrens Behälter mit einer aus lediglich zwei Schichten aufgebauten Wandung herzustellen, wobei hier entsprechend dem Vorstehenden verfahren wird.

In vorteilhafter Ausgestaltung des erfindungsgemäßen Verfahrens ist ferner vorgesehen, daß das Masterbatch des ersten Kunststoffmaterials wenigstens einen als Haftvermittler in bezug auf den verwendeten Basiskunststoff wirkenden Zusatz enthält. Damit wird eine zuverlässige Verbindung zwischen der das erste Kunststoffmaterial enthaltenden Schicht und den weiteren Schichten bei einem mehrschichtigen Aufbau der Wandungen der Behälter beim Zusammenführen beider Kunststoffmaterialien in der Extruderdüse zur Bildung eines schlauchförmigen Rohlings noch verbessert.

Weiterhin wird vorteilhafterweise zur Herstellung der das erste Kunststoffmaterial enthaltenden Schicht zumindest teilweise aufgearbeitetes Kunststoffmaterial verwendet, das bei der Versäuberung der jeweils fertiggeformten Behälter anfällt, wobei das erste Kunststoffmaterial als Masterbatch nur noch in einer solchen Menge zugeführt wird, die für die Einhaltung eines vorgegebenen spezifischen Widerstandes und/oder einer vorgegebenen Leitfähigkeit erforderlich ist.

Bei Transport- und/oder Lagerbehältern, die in der bisherigen Technik mit einer elektrisch leitenden, mit Leitruß versetzten Außenschicht versehen waren, wurden die beim Versäubern anfallenden Abfälle in den Kunststoff zur Herstellung der an das Transportgut angrenzenden Schicht eingearbeitet. Dies hatte zur Folge, daß zum Schutz dieser Schicht gegen chemische Einwirkungen die so gebildete tragende Schicht noch zusätzlich mit einer chemisch widerstandsfähigen weiteren Innenschicht versehen werden mußte. Da gemäß der vorliegenden Erfindung der vom ersten Kunststoffmaterial umfaßte leitfähige Kunststoff nur in einem relativ geringen Anteil in der Außenschicht und/oder den Innenschichten bei einem zwei- bzw. dreischichtigen Aufbau enthalten ist, kann der bei der Versäuberung entstehende Abfall üblicherweise granuliert und nach Erfahrungswerten durch die weitere Zumischung von einem noch geringen Anteil des als Masterbatch vorliegenden ersten Kunststoffmaterials in bezug auf die Anforderungen an die Eigenleitfähigkeit entsprechend aufgebessert und erneut zur Herstellung der den leitfähigen Kunststoff aufweisenden Schicht verwendet werden. Hierdurch ergibt sich zum einen eine weitere Kostenersparnis und zum anderen den Vorteil, daß zur Herstellung der unmittelbar an das Transportgut angrenzenden Schicht des Behälters ein genuines, vorzugsweise fabrikationsfrisches, nichtleitendes weiteres Kunststoffmaterial, insbesondere High-density-Polyethylen, verwendet und dementsprechend eine zuverlässige Gewährleistung für die Festigkeit und Tragfähigkeit eines derartigen Behälters gegeben werden kann.

Diese und weitere Vorteile der vorliegenden Erfindung werden anhand der nachstehenden Fig. erläutert. Es zeigen:

Fig. 1     einen erfindungsgemäß hergestellten Behälter aus Kunststoff auf einem palettenartigen Untergestell mit Schutzgitter;

Fig. 2     einen Teilvertikalschnitt durch die Wandung eines zweischichtigen Kunststoffbehälters in größerem Maßstab; und

Fig. 3     das erfindungsgemäße Herstellungsverfahren in Form eines schematischen Fließbildes.

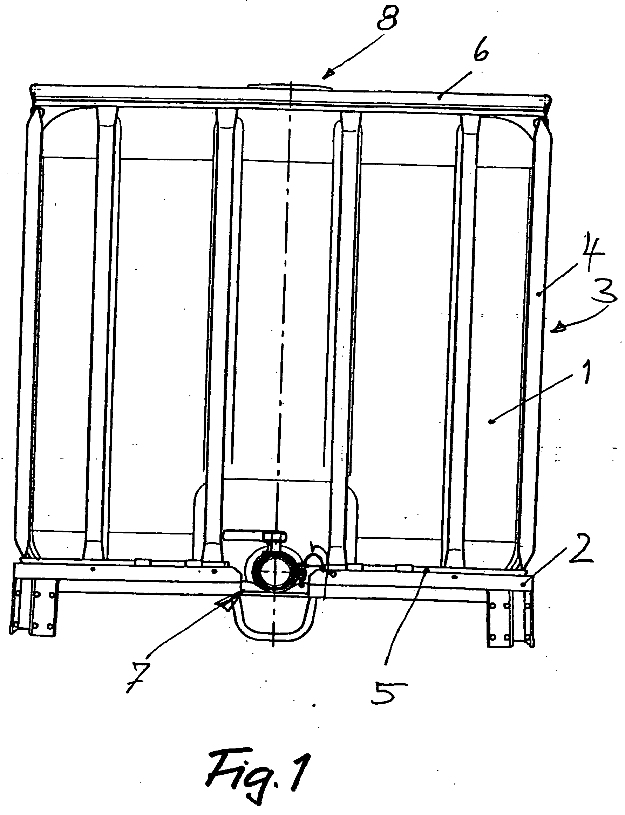

Fig. 1 zeigt eine typische Ausbildung des Behälters als sogenannten IBC. Der Behälter kann jedoch auch jede andere Form und Ausgestaltung aufweisen. Die in Fig. 1 gezeigte Behälteranordnung weist einen Behälter 1 aus Kunststoff auf, der auf einem palettenartigen Untergestell 2, bevorzugt aus einem elektrisch leitfähigen Material, beispielsweise aus Stahl oder Kunststoff, aufsteht. Mit dem palettenartigen Untergestell 2 ist zum Schutz des Behälters 1 gegen mechanische Einwirkungen ein Schutzgitter 3 verbunden, das im wesentlichen aus einer Reihe von vertikalen Stäben 4 besteht, die jeweils im unteren Ende mit einem Rahmen 5 und im oberen Ende mit einem Rahmen 6 fest verbunden sind. Statt eines derartigen Stabgitters sind auch Schutzgitter mit sich kreuzenden Gitterstäben einsetzbar. Der Behälter 1 ist in Höhe seines Bodens mit einem Ablaufventil 7 versehen. Die Behälterdecke ist mit einem Einfüllstutzen versehen, der beispielsweise mittels eines Schraubdeckels 8 verschließbar ist.

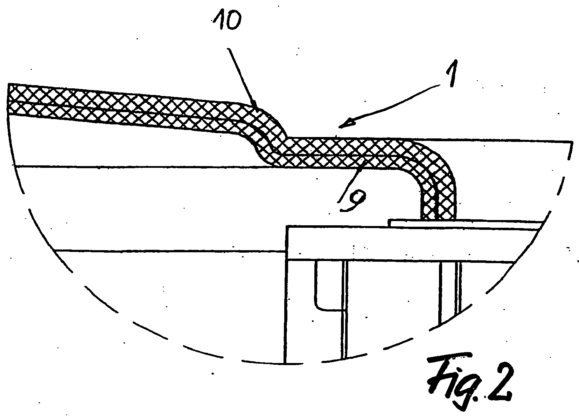

In Fig. 2 ist in vergrößerter Darstellung ein Teilschnitt durch die Behälterwandung dargestellt. Wie Fig. 2 entnommen werden kann, ist die Wandung des Behälters 1 zweischichtig aufgebaut, und zwar mit einer Innenschicht 9 aus dem nichtleitfähigen Kunststoffmaterial, hier High-density-Polyethylen, und einer die Innenschicht 9 umschließenden Außenschicht 10, welche aus einer Mischung des ersten Kunststoffmaterials, umfassend den leitfähigen Kunststoff, mit dem weiteren Kunststoffmaterial besteht. Dabei wird für die Herstellung der Außenschicht als Basiskunststoff und zweiter Kunststoff des ersten bzw. weiteren, nichtleitfähigen Kunststoffmaterials, ebenfalls High-density-Polyethylen verwendet. Aufgrund der Koextrusion der Innenschicht 9 und der Außenschicht 10, wobei zusätzlich ein Haftvermittler der die Außenschicht 10 bildenden Mischung zugesetzt ist, ist die Außenschicht 10 mit der Innenschicht 9 fest und homogen verbunden.

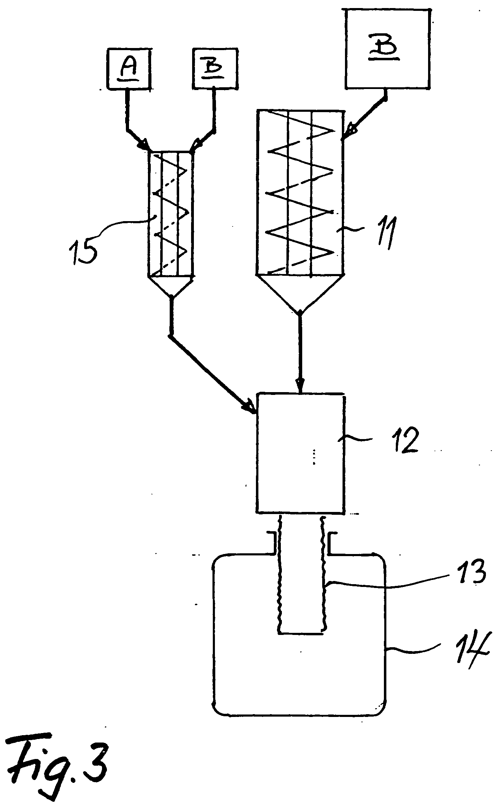

Wie aus dem in Fig. 3 schematisch wiedergegebenen Fließbild ersichtlich, wird der zweischichtige Kunststoffbehälter 1, wie in Fig. 2 gezeigt, im Wege des Blasextrusionsverfahrens hergestellt. Hierbei wird das einem Hauptextruder 11 zugeführte nichtleichtfähige Kunststoffmaterial B aufgeschmolzen und einer Ringdüse 12 zugeführt, in der ein schlauchförmiger Rohling 13 erzeugt wird, der dann in eine Glasform 14 eingegeben und zu einem Behälter umgeformt wird. Dabei kann zur Herstellung einer hier nicht gezeigten dreischichtigen Wandung auch vorgesehen sein, daß ein weiterer Hauptextruder 11 vorgesehen wird, welcher dann über eine getrennte Zuleitung der Ringdüse 12 derart verfügt, daß durch die beiden Hauptextruder eine Außen- und eine Innenschicht gebildet werden, welche eine Zwischenschicht umfassen, die leitfähigen Kunststoff aufweist.

Zur Herstellung der als Außenschicht auf den schlauchförmigen Rohling aufzubringenden Mischung aus dem ersten und dem nichtleitfähigen Kunststoffmaterial wird bei der in Fig. 3 gezeigten Herstellung eines zweiwandigen Kunststoffbehälters das erste Kunststoffmaterial A, welches den leitfähigen Kunststoff umfaßt, einem zweiten Extruder 15 zugeführt. Zusätzlich wird nichtleitfähiges Kunststoffmaterial B ebenfalls dem Extruder 15 über eine getrennte Zuleitung zugeführt. Dabei wird das Kunststoffmaterial A als Masterbatch vorgelegt. Zusätzlich kann auch vorgesehen werden, daß die Kunststoffmaterialien A und B zunächst vor Eingabe in den Extruder 15 mittels einer Rührvorrichtung oder von Hand vermischt werden, um hier eine hochhomogene Verteilung des im ersten Kunststoffmaterial A enthaltenen leitfähigen Kunststoffes zu erzielen. Das erste, den leitfähigen Kunststoff aufweisende Kunststoffmaterial A wird dabei in der gewünschten Menge, insbesondere bei einer volumetrischen Dosierung, entweder bereits der vorgeschalteten und in Fig. 3 nicht gezeigten Rührvorrichtung oder aber dem Extruder 15 zugeführt. Die Kunststoffmaterialien A und B werden im Extruder 15 homogen vermischt und aufgeschmolzen, wobei der Extruder 15 in bezug auf Druck und Temperatur so eingestellt ist, daß der im Kunststoffmaterial A enthaltene leitfähige Kunststoff nicht chemisch verändert wird.

Durch die homogene Vermischung der Kunststoffmaterialien A und B im Extruder 15 entsteht eine Mischung, die als vorzugsweise dünne Außenschicht in der Ringdüse 12 auf das die Innenschicht bildende Kunststoffmaterial B aufgebracht wird, wobei ein homogener Verbund zwischen beiden Kunststoffschichten entsteht. Der so gebildete zweischichtige schlauchförmige Rohling 13 wird dann in der Blasform 14 in die gewünschte Behälterform umgeformt.

Die Stärke der Außenschicht muss so bemessen werden, daß am fertigen Behälter in den blastechnischen Problemzonen wie insbesondere den Eckbereichen eine Mindestschichtdicke erhalten bleibt. Bevorzugt wird das erste Kunststoffmaterial A in einer Menge von etwa 15 bis etwa 25 Gew%, bezogen auf die Gesamtmenge der aus dem ersten und dem nichtleitfähigen Kunststoffmaterial gebildeten Mischung, in diese eingebracht. Als leitfähiger Kunststoff kann dabei insbesondere der unter der Marke "PermaStat" vertriebene Kunststoff der RTP Company, Winona, USA, Verwendung finden. Derartige hergestellte Behälter weisen für die den leitfähigen Kunststoff enthaltende Schicht einen speziellen Widerstand von $50$ bis $80 \cdot 10^{15}\ \Omega$ auf.

Wird, wie bevorzugt vorgesehen, ein helles, lichtdurchscheinendes High-density-Polyethylen als Basiskunststoff für die Innenschicht und/oder Außenschicht bei einem dreischichtigen Aufbau des Behälters sowie als zweiter Kunststoff in dem nichtleichtfähigen Kunststoffmaterial verwendet, so kann es zweckmäßig sein, die das erste Kunststoffmaterial aufweisende Außen- bzw. Innenschicht geringfügig einzufärben, so daß eine optisch einfach nachprüfbare Garantie dafür gegeben werden kann, daß die den leitfähigen Kunststoff aufweisende Außenschicht des Behälters diesen vollflächig umschließt. Der maximal mögliche Grad der Einfärbung ergibt sich aus der Anforderung, daß die Wandungen des beschichteten Behälters nicht durchscheinend sein müssen, damit eine allseitige optische Füllstandskontrolle möglich ist. Da die Abfälle aus der Versäuberung des fertigen Behälters als Granulat aufgearbeitet und bei der Herstellung des ersten Kunststoffmaterials A wiederverwertet werden können, besteht durch die Einfärbung keinerlei Nachteil.

Bei der Verwendung von Abfällen aus der Endbearbeitung werden diese dem Extruder 15 anstelle von dem weiteren, nichtleitfähigen Kunststoffmaterial B zugeführt, wobei dann bei der Aufbereitung der Abfälle durch entsprechende Prüfung von Proben, beispielsweise durch Leitfähigkeitsmessungen, aber insbesondere auch durch Überprüfung mit UV-Licht, zumindest qualitativ überprüfbar ist, daß leitfähiger Kunststoff vorhanden ist. Zweckmäßig ist es dabei, wenn bei der Aufbereitung von Abfällen die anfallenden Mengen in größeren Partien gesammelt und beispielsweise in Form eines Granulats homogenisiert werden. Bei einem dreischichtigen Aufbau werden leitfähigen Kunststoff enthaltende und sonstige Abfälle als Ersatz insbesondere des Basiskunststoffes dem ersten Kunststoffmaterial A zugeführt.

**Patentansprüche**

1. Verfahren zur Herstellung eines gegen elektrostatische Aufladungen geschützten Behälters (1) für Transport und/oder Lagerung von fließfähigen Stoffen, dessen Wandungen mindestens einschichtig aufgebaut sind unter Verwendung eines leitfähigen Kunststoffes, wobei:

- die mindestens eine Schicht (10) ein erstes Kunststoffmaterial (A) umfasst;
- das erste Kunststoffmaterial (A) einen Anteil eines leitfähigen Kunststoffes umfasst;
- das erste Kunststoffmaterial (A) einen Anteil eines Basiskunststoffes umfasst;
- das erste Kunststoffmaterial (A) einen mittleren spezifischen Widerstand von kleiner als $10^{10}\ \Omega$ aufweist;
- ein Anteil des ersten Kunststoffmaterials (A) in Form eines Masterbatches mit einem Anteil eines nichtleitfähigen Kunststoffmaterials (B) in einem vorgebbaren Verhältnis gemischt und die Mischung einer Blasformmaschine zugeführt wird;
- das erste Kunststoffmaterial (A) als Basiskunststoff ein Homo-, Co-, Block- und/oder Randompolymer umfasst, ausgewählt aus einer Gruppe umfassend Polyethylene und/oder Polypropylene;
- das nichtleitfähige Kunststoffmaterial (B) einen zweiten Kunststoff aufweist, ausgewählt aus einer Gruppe umfassend Homo-, Co-, Block- und/oder Randompolymere des Polyethylen und/oder Polypropylen; und
- der Basiskunststoff des ersten Kunststoffmaterials (A) und der zweite Kunststoff des nichtleitfähigen Kunststoffmaterials (B) chemisch identisch sind.

2. Verfahren gemäß Anspruch 1, **dadurch gekennzeichnet, dass** die Mischung des ersten (A) und des nichtleitfähigen Kunststoffmaterials (B) in einem Extruder (15) vorgenommen wird.

3. Verfahren gemäß einem der vorhergehenden Ansprüche, **dadurch gekennzeichnet, dass** das erste Kunststoffmaterial (A) zur Bildung einer mittleren Schicht einer mehrschichtigen Wandung des im Blasformverfahren herzustellenden Behälters (1) mit dem zur Bildung der tragenden Außen- (10) und Innenschicht (9) verwendeten nichtleitfähigen Kunststoffmaterials (B) als schlauchförmiger Rohling (13) koextrudiert wird, der der Blasformmaschine zugeführt wird.

4. Verfahren gemäß einem der vorhergehenden Ansprüche, **dadurch gekennzeichnet, dass** der Masterbatch des ersten Kunststoffmaterials (A) wenigstens einen als Haftvermittler In Bezug auf den verwendeten Basiskunststoff wirkenden Zusatz enthält.

5. Verfahren gemäß einem der vorhergehenden Ansprüche, **dadurch gekennzeichnet, dass** zur Herstellung der das erste Kunststoffmaterial (A) enthaltenden Schicht (10) zumindest teilweise aufgearbeitetes Kunststoffmaterial verwendet wird, das bei der Versäuberung der jeweils fertiggeformten Behälter (1) anfällt, und dass das erste Kunststoffmaterial (A) als Masterbatch nur noch in einer solchen Menge zugeführt wird, die für die Einhaltung eines vorgegebenen spezifischen Widerstandes erforderlich ist.

6. Verfahren gemäß einem der vorhergehenden Ansprüche, **dadurch gekennzeichnet, dass** der Basiskunststoff ein High-density-Polyethylen ist.

7. Verfahren gemäß einem der vorhergehenden Ansprüche, **dadurch gekennzeichnet, dass** der leitfähige Kunststoff, gegebenenfalls nach einer Dotierung, eine Leitfähigkeit von mindestens 1 S m$^{-1}$ aufweist.

8. Verfahren gemäß einem der vorhergehenden Ansprüche, **dadurch gekennzeichnet, dass** der leitfähige Kunststoff mit einem Elektronendonor oder mit einem Elektronenakzeptor dotiert ist.

9. Verfahren gemäß Anspruch 8, **dadurch gekennzeichnet, dass** der Elektronendonor oder Elektronenakzeptor ausgewählt ist aus einer Gruppe umfassend Halogenide und/oder schwefelhaltige Verbindungen.

10. Verfahren gemäß einem der vorhergehenden Ansprüche, **dadurch gekennzeichnet, dass** der leitfähige Kunststoff ausgewählt ist aus einer Gruppe umfassend Polyacetylene, Polypyrole, Polythiophene, Polyaniline, Polyethylendioxithiophene, Polyphenylenvinylidene und/oder Polydialkylfluorene.

11. Verfahren gemäß einem der vorhergehenden Ansprüche, **dadurch gekennzeichnet, dass** das nichtleitfähige Kunststoffmaterial (B) einen mittleren spezifischen Widerstand von größer als 200 x 10$^{15}$ $\Omega$ aufweist.

12. Verfahren gemäß einem der vorhergehenden Ansprüche, **dadurch gekennzeichnet, dass** die Schicht (10) das erste Kunststoffmaterial (A) In einer Menge von 0,5 bis 50 Gew%, bezogen auf die gesamte Menge der Schicht (10), aufweist

13. Verfahren gemäß einem der vorhergehenden Ansprüche, **dadurch gekennzeichnet, dass** der mittlere spezifische Widerstand der Schicht (10) kleiner als 190 x 10$^{15}$ $\Omega$ ist.

14. Verfahren gemäß einem der vorhergehenden Ansprüche, **dadurch gekennzeichnet, dass** die Wandungen des Behälters (1) mindestens dreischichtig aufgebaut sind, wobei die innen liegende mindestens eine Schicht das erste Kunststoffmaterial (A) aufweist, wohingegen die Außen- (10) und Innenschicht (9) das erste Kunststoffmaterial (A) nicht aufweisen.

15. Verfahren gemäß einem der vorhergehenden Ansprüche, **dadurch gekennzeichnet, dass** die Wandungen des Behälters (1) lichtdurchlässig sind.

## Claims

1. Method for manufacturing a container (1) for transporting and/or storing pourable materials, protected against anti-static charges and which has walls composed of at least one layer by using a conductive plastic material, wherein

- the at least one layer (10) comprises a first plastic material (A);
- the first plastic material (A) comprises a portion of a conductive plastic;
- said first plastic material (A) comprises a portion of a basic plastic;
- said first plastic material (A) has an average specific resistivity smaller than $10^{10}$ Ω;

- a portion of said first plastic material (A) in the form of a master batch with a portion of a non-conductive plastic material (B) is mixed in a specifiable ratio and said mixture is fed into a blow molding apparatus;

- said first plastic material (A) comprises as a basic plastic a homo-, co-, block-, and/or random polymer, selected from a group consisting of polyethylenes and/or polypropylenes;

- said non-conductive plastic material (B) comprises a second plastic, selected from a group comprising homo-, co-, block and/or random polymers of the polyethylene and/or polypropylene; and

- the basic plastic of said first plastic material (A) and the second plastic of said non-conductive plastic material (B) are chemically identical.

2. Method according to claim1, **characterized in that** the mixture of said first (A) and said non-conductive plastic material (B) is made in an extruder (15).

3. Method according to anyone of the preceding claims, **characterized in that** said first plastic material (A) for forming a medium layer of a multi-layered wall of said container (1) produced by blow molding is coextruded as a tubular blank (13) with said non-conductive plastic material (B) for forming the bearing outer (10) and inner layer (9), whereby the tubular blank (13) is fed into said blow molding apparatus.

4. Method according to anyone of the preceding claims, **characterized in that** said master batch of said plastic material (A) contains at least one additive operating as a bonding agent relative to the basic plastic used.

5. Method according to anyone of the preceding claims, **characterized in that** for producing said layer (10) containing said first plastic material (A), at least partially reclaimed plastic material is used which is received from cutting off excess of the respective completed containers (1), and **in that** said first plastic material (A) as a master batch is merely fed at such quantity required to comply with the given specific resistivity.

6. Method according to anyone of the preceding claims, **characterized in that** said basic plastic is a high density polyethylene.

7. Method according to anyone of the preceding claims, **characterized in that** said conductive plastic has a conductivity of at least 1 S m$^{-1}$, following doping, if necessary.

8. Method according to anyone of the preceding claims, **characterized in that** said conductive plastic is doped with an electron donor or with an electron acceptor.

9. Method according to claim 8, **characterized in that** said electron donor or electron acceptor are selected from a group consisting of halogenides and/or sulfurous compounds.

10. Method according to anyone of the preceding claims, **characterized in that** said conductive plastic is selected from a group consisting of polyacetylenes, polypyroles, polythiophenes, polyanilines, polyethylene dioxithiophenes, polyphenylene vinylidenes, and/or polydialkyl fluorenes.

11. Method according to anyone of the preceding claims, **characterized in that** said non-conductive plastic material (B) has an average specific resistivity of more than 200 x $10^{15}$ Ω.

12. Method according to anyone of the preceding claims, **characterized in that** said layer (10) comprises said first plastic material (A) in an amount from 0.5 to 50 percent by weight based on the total amount of said layer (10).

13. Method according to anyone of the preceding claims, **characterized in that** the average specific resistivity of said layer (10) is smaller than 190 x $10^{15}$ Ω.

14. Method according to anyone of the preceding claims, **characterized in that** the walls of said container (1) are composed of at least three layers, wherein the interior at least one layer comprises said first plastic material (A), whereas the outer (10) and inner layer (9) do not comprise said first plastic material (A).

15. Method according to anyone of the preceding claims, **characterized in that** the walls of said container (1) are translucent.

## Revendications

1. Procédé de fabrication d'un récipient (1) protégé contre des charges électrostatiques pour le transport et/ou le stockage de substances coulantes, dont les parois sont construites en au moins une couche en utilisant une matière plastique conductrice, dans lequel:

  - ladite au moins une couche (10) comprend un premier matériau de matière plastique (A);
  - le premier matériau de matière plastique (A) comprend une part d'une matière plastique conductrice;
  - le premier matériau de matière plastique (A) comprend une part d'une matière plastique de base;

- le premier matériau de matière plastique (A) présente une résistance spécifique moyenne inférieure à $10^{10}$ $\Omega$;

- la part du premier matériau de matière plastique (A) est mélangée sous la forme d'un mélange-maître avec une part d'un matériau de matière plastique non conducteur (B) dans un rapport prédéfini et le mélange est envoyé à une machine de formage par soufflage;

- le premier matériau de matière plastique (A) comprend comme matière plastique de base un homopolymère, un copolymère, un polymère bloc et/ou un polymère aléatoire, choisi dans un groupe comprenant des polyéthylènes et/ou des polypropylènes;

- le matériau de matière plastique non conducteur (B) présente une deuxième matière plastique, choisie dans un groupe comprenant des homopolymères, des copolymères, des polymères blocs et/ou des polymères aléatoires du polyéthylène et/ou du polypropylène; et

- la matière plastique de base du premier matériau de matière plastique (A) et la deuxième matière plastique du matériau de matière plastique non conducteur (B) sont chimiquement identiques.

2.  Procédé selon la revendication 1, **caractérisé en ce que** l'on effectue le mélange du premier matériau (A) et du matériau de matière plastique non conducteur (B) dans une extrudeuse (15).

3.  Procédé selon l'une quelconque des revendications précédentes, **caractérisé en ce que** l'on co-extrude le premier matériau de matière plastique (A) pour la formation d'une couche moyenne d'une paroi multicouche du récipient (1) à fabriquer par le procédé de formage par soufflage avec le matériau de matière plastique non conducteur (B) utilisé pour la formation de la couche extérieure (10) et intérieure (9) porteuses sous la forme d'une ébauche en forme de boyau (13), que l'on envoie à la machine de formage par soufflage.

4.  Procédé selon l'une quelconque des revendications précédentes, **caractérisé en ce que** le mélange-maître du premier matériau de matière plastique (A) contient au moins un additif agissant comme agent adhésif par rapport à la matière plastique de base utilisée.

5.  Procédé selon l'une quelconque des revendications précédentes, **caractérisé en ce que** l'on utilise, pour la fabrication de la couche (10) contenant le premier matériau de matière plastique (A), un matériau de matière plastique au moins partiellement réhabilité, qui est obtenu lors du nettoyage des récipients respectifs (1) définitivement formés, et **en ce que** le premier matériau de matière plastique (A) n'est envoyé sous forme de mélange-maître que dans la quantité qui est nécessaire pour respecter une résistance spécifique prédéterminée.

6.  Procédé selon l'une quelconque des revendications précédentes, **caractérisé en ce que** la matière plastique de base est un polyéthylène haute densité.

7.  Procédé selon l'une quelconque des revendications précédentes, **caractérisé en ce que** la matière plastique conductrice présente, éventuellement après un dopage, une conductibilité d'au moins 1 S m$^{-1}$.

8.  Procédé selon l'une quelconque des revendications précédentes, **caractérisé en ce que** la matière plastique conductrice est dopée avec un donneur d'électrons ou avec un accepteur d'électrons.

9.  Procédé selon la revendication 8, **caractérisé en ce que** le donneur d'électrons ou l'accepteur d'électrons est choisi dans un groupe comprenant des halogénures et/ou des composés soufrés.

10.  Procédé selon l'une quelconque des revendications précédentes, **caractérisé en ce que** la matière plastique conductrice est choisie dans un groupe comprenant des polyacétylènes, des polypyrroles, des polythiophènes, des polyanilines, des polyéthylènedioxythiophènes, des polyphénylène vinylidènes et/ou des polydialkylfluorènes.

11.  Procédé selon l'une quelconque des revendications précédentes, **caractérisé en ce que** le matériau de matière plastique non conducteur (B) présente une résistance spécifique moyenne supérieure à 200 x $10^{15}$ $\Omega$.

12.  Procédé selon l'une quelconque des revendications précédentes, **caractérisé en ce que** la couche (10) présente le premier matériau de matière plastique (A) en une quantité de 0,5 à 50 % en poids, rapportée à la quantité totale de la couche (10).

13.  Procédé selon l'une quelconque des revendications précédentes, **caractérisé en ce que** la résistance spécifique moyenne de la couche (10) est inférieure à 190 x $10^{15}$ $\Omega$.

14.  Procédé selon l'une quelconque des revendications précédentes, **caractérisé en ce que** les parois du récipient (1) sont construites en au moins trois couches, dans lequel ladite au moins une couche interne présente le premier matériau de matière plastique (A), tandis que la couche extérieure (10) et intérieure (9) ne présentent pas le premier matériau de matière plastique (A).

**15.** Procédé selon l'une quelconque des revendications précédentes, **caractérisé en ce que** les parois du récipient (1) sont transparentes.

Fig.1

Fig.2

*Fig.3*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20206436 U
- DE 10216960
- EP 1439131 A